# EUROPEAN PATENT SPECIFICATION

(11) **EP 1 676 888 B1**
(45) Date of publication and mention of the grant of the patent: **24.10.2012**
(21) Application number: 04822294.7
(22) Date of filing: 05.11.2004
(51) Int. Cl.: C09B 61/00, A23L 1/275

(54) **METHOD OF OBTAINING LYCOPENE FROM TOMATO SKINS AND SEEDS**
VERFAHREN ZUR GEWINNUNG VON LYCOPIN AUS TOMATENHÄUTEN UND -KERNEN
PROCEDE D'OBTENTION DE LYCOPENE A PARTIR DE PEAUX ET DE GRAINES DE TOMATE

(43) Date of publication of application: 05.07.2006
(73) Proprietor: Conservas Vegetales de Extremadura, S.A., 06195 Villagranco del Guadiana (Badajoz) (ES)
(72) Inventor: ESPINOSA GARCÍA, Jesús, E-06195 Villafranco del Guadiana (Badajo (ES)
(74) Representative: Mato Adrover, Ángel Luis
(86) International application number: PCT/ES2004/070093
(87) International publication number: WO 2006/032712

(56) References cited:
- EP-A- 0 608 027
- EP-A- 0 818 225
- EP-A- 1 103 579
- EP-A- 1 471 151
- WO-A-96/13178
- WO-A-97/48287
- WO-A-03/079816
- US-A- 5 858 700
- US-A1- 2001 036 501
- US-A1- 2003 044 499
- DATABASE WPI Section Ch, Week 200356 Derwent Publications Ltd., London, GB; Class E24, AN 2003-587606 XP002337766 & CN 1 405 234 A (ZHAO J) 26 March 2003 (2003-03-26)
- DATABASE WPI Section Ch, Week 199628 Derwent Publications Ltd., London, GB; Class B07, AN 1996-272865 XP002337767 & JP 08 113723 A (SANEIGEN FFI KK) 7 May 1996 (1996-05-07)
- DATABASE WPI Section Ch, Week 200347 Derwent Publications Ltd., London, GB; Class B04, AN 2003-494230 XP002337768 & CN 1 403 506 A (BEIJING PURUIFU NATURAL MEDICAL MODERN P) 19 March 2003 (2003-03-19)

## Description

### OBJECT OF THE INVENTION

This invention refers to a process to obtain lycopene from tomato skins and seeds.

Lycopene is obtained after a series of steps of dehydration, seed separation, pelletization, extraction, distillation and crystallization.

### BACKGROUND OF THE INVENTION

The food industry in general generates a large amount of by-products, which in the tomato sector correspond to skins and seeds.

These by-products can be transformed into wastes with the subsequent environmental problems or can be reused facilitating in this way their recycling.

The tomato by-product presents a large proportion of lycopene concentrated mainly in the skins.

This characteristic gives these tomato by-products an important additional value, since lycopene has a range of applications in different industries.

Among these, in the food industry lycopene can be used as a nutraceutic.

In addition to its use as a nutraceutic it can also be used as a food dye, giving the food a red colour.

Other industries where lycopene can be used include the cosmetic's industry, where the antioxidant power of lycopene can help to prevent cellular degeneration to treat anti-aging in the skin.

Also, in the field of biomedicine lycopene can be used to prevent many types of tumours including tumours of the prostate, colon, stomach, oral cavity and rectum.

In biomedicine it can be used to prevent macular degeneration and cataracts. The veterinary industry also uses lycopene for therapeutic applications.

Thanks to the large number of applications of this product, it is of great interest to establish a process by which to obtain it.

In the literature of patents, different processes are known to obtain lycopene from tomato by-products.

Hence, the patent with publication number EP1103579 protects a process for the extraction of lycopene from different fruits, including tomatoes, obtaining lycopene by extracting it with alcohol at high temperatures.

The patent with publication number WO9748287 protects a process to obtain lycopene based on solvent extraction, but in this case the starting product is not the skins and seeds of the tomato but instead the pulp.

In the documents WO,A,03/079816, CN,A,1405234, JP,A,8113723, WO,A,96/13178, EP,A,1471151, US,A,5858700, WO,A,97/48287, EP,A,608027, CN,A,1403506, US,A,2003/044499 and EP,A,818225 also processes are disclosed in which lycopene is isolated from tomatoes or other sources.

There are no known processes to obtain lycopene which follow the same steps in the same order as the process of the present invention.

### DESCRIPTION OF THE INVENTION

The present invention refers to a process to obtain lycopene from tomato by-products, more specifically from seeds and skins.

The process consists sequentially of the following steps:
- A dehydration step
- A seed separation step
- A pelletization step
- A hexane extraction step
- A distillation step
- A short-term distillation step
- A lycopene crystallisation step

In each step, the concentration of lycopene is validated.

In a first step of the process, the skins and seeds which initially have a high water content are dehydrated.

It is necessary to reduce the water content to maximise the yield of the solvent extraction step.

After drying them, the seeds are removed. After removing the seeds, the substance pelletized so that during the extraction with organic solvents, compaction of the material to be extracted is avoided and, therefore, the formation of preferential intermediate steps, facilitating in this way contact between the pellet and the solvent.

The pellets are loaded into extractors where the soluble components are extracted in hexane.

At the end of the extraction process, a mixture of hexane-soluble compounds is obtained, this is passed through the distiller to separate the hexane from the tomato oleoresin, obtaining in this step an oleoresin rich in lycopene and free of organic solvents.

The oleoresin is distilled by short path distillation obtaining a fraction that does not contain carotenoids and a second fraction rich in carotenoids.

In the next step of the process the lycopene crystallises.

The concentration of lycopene is validated in each step.

### DESCRIPTION OF THE DRAWINGS

This descriptive report is accompanied by a set of plans which illustrate a preferred example and in no way limit the application of the invention.

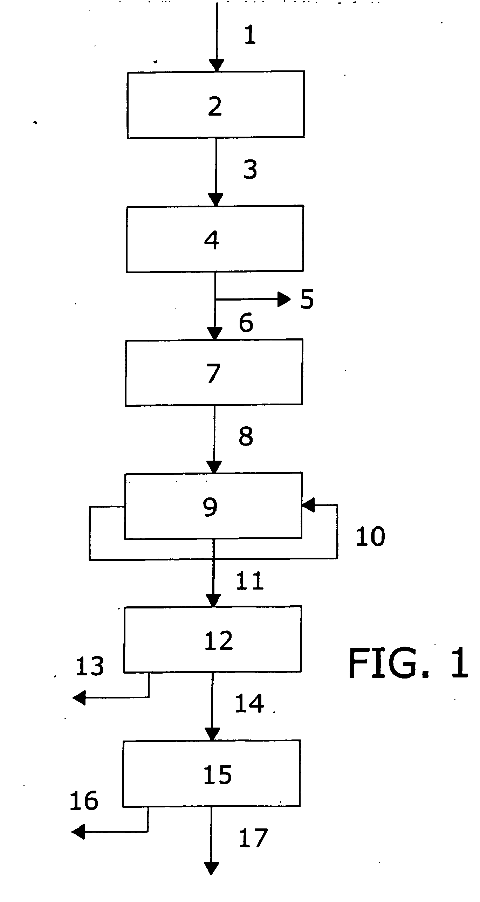

Figure 1 shows a diagram illustrating the process of the invention.

### PREFERRED EMBODIMENT OF THE INVENTION

In the light of the above description, the present invention consists in a process to obtain lycopenes from tomato seeds and skins.

Skins and seeds (1), which are used as starting products, are generated by an industrial process to concentrate tomato and have 65 to 85% water content.

To use this raw material (1) as a source of lycopene, this water content must be reduced to values of around 6-10% or lower, since at this water content the equipment and extraction solvent operate optimally.

In the dehydration process, the tomato skin and seeds are loaded into a Trommel type industrial drier (2), with forced air at high temperatures, adjusting the air flow and temperature so that the temperature at the exit of the drier is between 50 and 90°C and tomato skins and seeds have a water content of around 6-10%.

The dehydrated skins and seeds (3) are transferred to a vibrating sieve (4), where the seeds are separated (5). The skins are loaded into a pelletizer (7).

The pellets (8) of the dehydrated tomatoes are loaded into industrial extractors (9) in a process of continuous flow.

After this, the hexane (10), an organic solvent used in the food industry to obtain lycopene from tomato skins, is added. The hexane (10) is made to recirculate through the tomato by-products, so that the solvent extracts the soluble components from the material to be extracted.

From the industrial extraction of tomato skins with organic solvents, a mixture is obtained (11) of hexane and the extract.

The mixture (11) from the extractor is sent to an industrial distiller to separate the hexane (13) from the tomato oleoresin (14). After the mixture (11) has been distilled we obtain an oleoresin (14) from tomatoes with a high content of lycopenes and free organic solvents (13).

To increase the lycopene concentration, the oleoresin obtained from the tomato (14), is distilled by short path distillation, to eliminate the part that does not contain carotenoids. In this step, the tomato oleoresin, rich in lycopenes and solvent free, is loaded into a molecular distiller (15) where the part not containing carotenoids (16) is separated and the fraction rich in carotenoids (17) is collected.

To achieve the final concentration of lycopene, the lycopene is crystallized so that the carotenated fraction (17) is saponified, diluted and filtered.

In the saponification process, the fraction (17) obtained from short path distillation is collected. Propylenglycol is added. The reaction mixture is made inert with N₂. The reaction mixture is homogenized and heated. KOH is added at 45% in weight and the mixture is stirred for 90 -160 minutes. After one hour, the same amount of KOH is added.

The reaction mixture is diluted with water in a 1:4 proportion in weight.

The final solution obtained is vacuum filtered using 45µm filter paper.

The lycopene concentration obtained and the quality of the oleoresin and of the crystallized portion, are validated by high power liquid chromatography (HPLC), using a special analytical column for lycopene, furnished with an intermediate column and a precolumn. Lycopene standards are used to calibrate the liquid chromatograph.

The lycopene obtained has a purity between 65 and 85%.

Lycopene should be stored in the absence of oxygen, since its antioxidant property gives it a great attraction for oxygen and it becomes rapidly oxidised. To avoid contact with oxygen, lycopene is vacuum packed or packed in a nitrogen atmosphere.

Moreover, the packaging should be opaque to prevent light from entering since lycopene is photosensitive and degrades on contact with light. Packaging with lycopene should be kept away from high temperatures since the active ingredient is thermosensitive and is, therefore, stored in forced temperature chambers.

Contact with oxygen, light and high temperatures should be avoided while obtaining and storing it in order to achieve and to maintain optimum quality for the final product.

Changes in the materials and size, shape and availability of the components of this invention, described in a non-limiting manner, do not alter the essence of the invention, and this description is sufficient for the process to be reproduced by an expert.

## Claims

1. Process to obtain lycopene from tomato skins and seeds **characterized In that** it comprises of the following sequential steps:
• A dehydration step
• A step for eliminating seeds
• A pelletization step
• A hexane extraction step (10)
• A distillation step
• A short path distillation step
• A lycopene crystallization step
The concentration of lycopene is validated during each step.

2. A process according to Claim 1 **characterized in that** the dehydration step is carried out in an industrial drier (2) with forced air with a temperature for the outgoing air of between 50° and 90°C.

3. A process according to Claim 1 **characterized in that** the extraction step is carried out continuously.

4. Process according to Claim 1 **characterized in that** the starting products (1) during the dehydration step are introduced having a water content between 65 and 85% and with adjustment in the humidity of the final products (3) of the dehydration step as having less than 10%.

5. Process according to Claim 1 **characterized in that** the short path distillation is carried out in a molecular distiller (15).

6. Process according to Claim 1-**characterized in that** the crystallization step comprises of the following steps:
• Saponification
• Dilution
• Filtration

7. Process according to Claim 6, **characterized in that** during the saponification step propyleneglycol is added to the fraction (17). The reaction mixture is made inert with N₂, homogenized and heated, 45% weight KOH is added and the mixture is stirred for 90-160 min. After one hour the same amount of KOH is added again.

8. Process according to Claim 6 **characterized in that** during the dilution step the reaction mixture is diluted with water in a weight proportion of 1:4.

9. Process according to Claim 6 **characterized in that** the filtration step is carried out with a 45µm filter paper.

10. Process according to Claim 1 **characterized in that** the validation of each step is carried out using a high resolution liquid chromatograph.

## Patentansprüche

1. Verfahren zur Gewinnung von Lycopin aus Tomatenhäuten und - samen, **dadurch gekennzeichnet, dass** es die folgenden aufeinanderfolgenden Schritte umfasst:
• einen Dehydratisierungsschritt
• einen Schritt zur Entfernung der Samen
• einen Granulierungsschritt
• einen Extraktionsschritt mit Hexan (10)
• einen Destillationsschritt
• einen Kurzwegdestillationsschritt
• einen Lycopinkristallisationsschritt,
• wobei die Lycopinkonzentration bei jedem Schritt validiert wird.

2. Verfahren nach Anspruch 1, **dadurch gekennzeichnet, dass** der Dehydratisierungsschritt in einem Industrietrockner (2) mit Zwangsluft bei einer Temperatur der Abluft zwischen 50° und 90°C durchgeführt wird.

3. Verfahren nach Anspruch 1, **dadurch gekennzeichnet, dass** der Extraktionsschritt kontinuierlich durchgeführt wird.

4. Verfahren nach Anspruch 1, **dadurch gekennzeichnet, dass** die Ausgangsstoffe (1) während des Dehydratisierungsschritts mit einem Wassergehalt zwischen 65 und 85% eingegeben werden und mit einer Einstellung der Feuchtigkeit der Endprodukte (3) des Dehydratisierungsschritts, so dass sie unter 10% liegt.

5. Verfahren nach Anspruch 1, **dadurch gekennzeichnet, dass** die Kurzwegdestillation in einem Molekulardestillationsapparat (15) durchgeführt wird.

6. Verfahren nach Anspruch 1, **dadurch gekennzeichnet, dass** der Kristallisationsschritt die folgenden Schritte umfasst:
• Verseifung
• Verdünnung
• Filtration.

7. Verfahren nach Anspruch 6, **dadurch gekennzeichnet, dass** während des Verseifungsschritts Propylenglykol der Fraktion (17) zugesetzt wird, dass das Reaktionsgemisch mit N₂ inert gemacht, homogenisiert und gewärmt wird, dass 45 Gew.-% KOH zugesetzt wird und dass das Gemisch 90-160 Minuten lang gerührt wird, wobei nach einer Stunde die gleiche Menge KOH erneut zugesetzt wird.

8. Verfahren nach Anspruch 6, **dadurch gekennzeichnet, dass** während des Verdünnungsschritts das Reaktionsgemisch mit Wasser in einem Gewichtsverhältnis von 1:4 verdünnt wird.

9. Verfahren nach Anspruch 6, **dadurch gekennzeichnet, dass** der Filtrationsschritt mit einem 45 □m Filterpapier durchgeführt wird.

10. Verfahren nach Anspruch 1, **dadurch gekennzeichnet, dass** die Validierung jedes Schritts unter Verwendung eines Hochleistungsflüssigkeitschromatographs durchgeführt wird.

## Revendications

1. Procédé pour obtenir du lycopène à partir de la peau et des graines des tomates **caractérisé en ce qu'**il comprend les étapes séquentielles suivantes :
• une étape de déshydratation
• une étape d'élimination des graines
• une étape de pelletisation
• une étape d'extraction d'hexane (10)
• une étape de distillation
• une étape de distillation à court trajet
• une étape de cristallisation du lycopène la concentration de lycopène est validée lors de chaque étape.

2. Procédé selon la revendication 1, **caractérisé en ce que** l'étape de déshydratation est réalisée dans un séchoir industriel (2) avec de l'air forcé à une température de l'air sortant de 50°C à 90°C.

3. Procédé selon la revendication 1, **caractérisé en ce que** l'étape d'extraction est réalisée en continu.

4. Procédé selon la revendication 1, **caractérisé en ce que** les produits de départ (1) lors de l'étape de déshydratation sont introduits avec un contenu en eau allant de 65 a 85% et avec un ajustage dans l'humidité des produits finaux (3) de l'étape de déshydratation inférieur à 10%.

5. Procédé de selon la revendication 1, **caractérisé en ce que** la distillation à court trajet est réalisée dans un distillateur à court trajet (15).

6. Procédé selon la revendication 1, **caractérisé en ce que** l'étape de cristallisation comprend les étapes suivantes :
• saponification
• dilution
• filtration.

7. Procédé selon la revendication 6, **caractérisé en ce que** lors de l'étape de saponification on ajoute du propylène glycol à la fraction (17), le mélange réactionnel est rendu inerte avec N₂, homogénéisé et réchauffé, on ajoute 45% en poids de KOH et le mélange est agité pendant 90-160 minutes, après une heure on ajoute à nouveau la même quantité de KOH.

8. Procédé selon la revendication 6, **caractérisé en ce que** lors de l'étape de dilution le mélange réactionnel est dilué avec de l'eau dans une proportion en poids de 1:4.

9. Procédé selon la revendication 6, **caractérisé en ce que** l'étape de filtration est réalisée avec un papier filtre de 45 µm.

10. Procédé selon la revendication 1, **caractérisé en ce que** la validation de chaque étape est réalisée en utilisant une chromatographie en phase liquide à haute performance.
